# EUROPEAN PATENT APPLICATION

(11) **EP 4 813 212 A1**
(43) Date of publication of application: **30.09.2026**
(21) Application number: 26166900.6
(22) Date of filing: 23.03.2026
(51) Int. Cl.: A23G 1/00, A23G 1/32, A23G 1/36

(54) **CHOCOLATES AND METHOD FOR PRODUCING CHOCOLATES**

(30) Priority: 26.03.2025 JP 2025052415
(71) Applicant: Fuji Oil Co., Ltd., Izumisano-shi, Osaka 598-8540 (JP)
(72) Inventor: ASANO, Shigezo, Osaka, 5988540 (JP); OSHIMA, Shuhei, Osaka, 5988540 (JP); HUANG, Yiitzu, Ibaraki, 3002436 (JP); KIMURA, Taiki, Ibaraki, 3002436 (JP)
(74) Representative: Boult Wade Tennant LLP

(57) **Abstract**

Provided are chocolates with physical properties of being soft and having plasticity while containing cocoa butter at a certain amount or more.

Solution:

Chocolates satisfying all of the following requirements (A) to (D).
(A) A content of cocoa butter in the chocolates is 15 mass% or more and 36 mass% or less.
(B) A fat-free cocoa solids content in the chocolates is 5 mass% or more and 40 mass% or less.
(C) A moisture content in the chocolates is 3 mass% or less.
(D) The hardness of the chocolates at 15°C is 20 N or less,
provided that, the hardness of the chocolates refers to a maximum load measured by a physical property measuring instrument and is the maximum load obtained under a measurement condition in which a cylindrical measuring instrument having a diameter of 8 mm is pressed at a speed of 1 mm/sec into the chocolates having a shape larger than 8 mm in diameter.

## Description

### Technical Field

The present invention relates to chocolates and a method for producing the chocolates.

### Background Art

Chocolates are popular as a luxury food throughout the world due to their rich flavor and excellent texture that melts in the mouth. Moreover, there is a strong demand to combine the flavor of chocolates with various food products such as baked goods and confectioneries. However, chocolates contain a large amount of cocoa butter and have a hard texture at temperatures from 15°C to 25°C. The hard texture of chocolates is a physical property that is obtained by tempering cocoa butter, and when cocoa butter is solidified without tempering, a phenomenon called blooming or graining in which crystals become coarse may occur at temperatures from 15°C to 25°C. Due to such properties of cocoa butter, using chocolates in filling applications that require physical properties of being soft and having plasticity may be difficult in some cases.

Patent Document 1 discloses an oil-in-water emulsion such as a filling that has a soft physical property when thawed and consumed at refrigerated or room temperature after being distributed in a frozen state. Chocolates may be used in the form of an oil-in-water emulsion in order to adjust the physical properties to be soft as in Patent Document 1.

Patent Document 2 describes an oil and/or fat composition that exhibits blooming and graining resistance even when the cocoa fat content contained in a soft chocolate is high, and has good flavor and meltability in the mouth.

Non-Patent Document 1 reports on a study regarding an inner-surface scraped surface heat exchanger as a method for controlling the temperature of chocolates.

### Citation List

### Patent Documents

Patent Document 1: WO 2023/162797 A1
Patent Document 2: JP 2008-228641 A

Non-Patent Document 1: C. LOISEL et al., Tempering of Chocolate in a Scraped Surface Heat Exchanger, JOURNAL OF FOOD SCIENCE, (USA), 1997, Volume 62, No. 4, pp. 773 to 780

### SUMMARY OF INVENTION

### Technical Problem

The present inventors have studied methods for achieving the physical properties of being soft and having plasticity while containing a large amount of cocoa butter. The invention of Patent Document 1 prepares an emulsion, but exhibits issues when chocolates are stored at normal temperature for a long period of time. Patent Document 2 is an invention of a soft chocolate that uses a specific oil and/or fat, but when a large amount of cocoa butter is blended therein, crystals may become coarse or the physical properties may become harder. Non-Patent Document 1 does not suggest any method for achieving the physical properties of being soft and having plasticity, and thus has not been useful as a reference.

Accordingly, an object of the present invention is to provide chocolates having the physical properties of being soft and having plasticity while containing a certain amount or more of cocoa butter.

### Solution to Problem

As a result of intensive studies, the inventors have discovered that chocolates containing a certain amount or more of cocoa butter with physical properties of being soft and having plasticity can be prepared by cooling the chocolates while stirring under specific conditions, and thereby arrived at the present invention.

That is, the present invention includes the following aspects.
[1] Chocolates satisfying all of the following requirements (A) to (D):
   (A) a content of cocoa butter in the chocolates is 15 mass% or more and 36 mass% or less;
   (B) a fat-free cocoa solids content in the chocolates is 5 mass% or more and 40 mass% or less;
   (C) a moisture content in the chocolates is 3 mass% or less; and
   (D) a hardness of the chocolates at 15°C is 20 N or less,
      provided that, the hardness of the chocolates refers to a maximum load measured by a physical property measuring instrument, and
      is the maximum load obtained under a measurement condition in which a cylindrical measuring instrument having a diameter of 8 mm is pressed at a speed of 1 mm/sec into the chocolates having a shape larger than 8 mm in diameter.
[2] The chocolates according to [1], further satisfying the following requirement (E):
   (E) in terms of a heat absorption amount measured by differential scanning calorimetry (DSC), a ratio of a "heat absorption percentage from a peak top temperature to a temperature of 5°C above the peak top temperature" to a "heat absorption percentage from 5°C below the peak top temperature to the peak top temperature" (that is, the ratio of (heat absorption percentage from the peak top temperature to the temperature of 5°C above the peak top temperature)/(heat absorption percentage from 5°C below the peak top temperature to the peak top temperature)) is 0.460 or less,
   provided that, the peak top temperature is the temperature at which a maximum heat absorption amount is exhibited, and
   the heat absorption amount measured by differential scanning calorimetry (DSC) refers to a value calculated by integrating an area between a baseline and a heat absorption curve, with the baseline being drawn in a manner connecting the heat absorption amount at a temperature of 15°C below the peak top temperature and the heat absorption amount at a temperature of 10°C above the peak top temperature, and
   the heat absorption percentage refers to a value calculated by subjecting the heat absorption amount obtained by differential scanning calorimetry (DSC) to divisional integration in units of 5°C with the peak top temperature being used as a reference point.
[3] The chocolates according to [1] or [2], further satisfying the following requirement (F):
   (F) a total amount of U3 and SU2 in triglycerides constituting an oil content of the chocolates is 50 mass% or more and 85 mass% or less.
[4] A method for producing chocolates, the method including all of the following steps a) and b) and using a scraped surface heat exchanger:
   a) bringing a chocolate mass to a molten state at a temperature of 45°C or higher; and
   b) cooling the chocolate mass obtained in a) to a product temperature of 16°C or higher and 23°C or less while stirring the chocolate mass, and filling a container with the chocolate mass.
[5] A composite confectionery, including the chocolates described in any one of aspects [1] to [3] in combination with another food product.
[6] A method for improving physical properties of chocolates, the method including preparing chocolates in a manner satisfying all of the following requirements (A) to (D):
   (A) a content of cocoa butter in the chocolates is 15 mass% or more and 36 mass% or less;
   (B) a fat-free cocoa solids content in the chocolates is 5 mass% or more and 40 mass% or less;
   (C) a moisture content in the chocolates is 3 mass% or less; and
   (D) a hardness of the chocolates at 15°C is 20 N or less,
      provided that, the hardness of the chocolates refers to a maximum load measured by a physical property measuring instrument, and
      is the maximum load obtained under a measurement condition in which a cylindrical measuring instrument having a diameter of 8 mm is pressed at a speed of 1 mm/sec into the chocolates having a shape larger than 8 mm in diameter.
[7] The method for improving physical properties of chocolates according to [6], the method including all of the following steps a) and b) and using a scraped surface heat exchanger:
   a) bringing a chocolate mass to a molten state at a temperature of 45°C or higher; and
   b) cooling the chocolate mass obtained in a) to a product temperature of 16°C or higher and 23°C or less while stirring the chocolate mass, and filling a container with the chocolate mass.

### Advantageous Effects of Invention

According to the present invention, chocolates containing cocoa butter at a certain amount or more with physical properties of being soft and having plasticity can be provided.

### Brief Description of Drawings

The present invention can be more clearly understood from the following description of preferred embodiments with reference to the accompanying drawings. However, the embodiments and drawings are for illustrative and explanatory purposes only and should not be used to define the scope of the present invention.

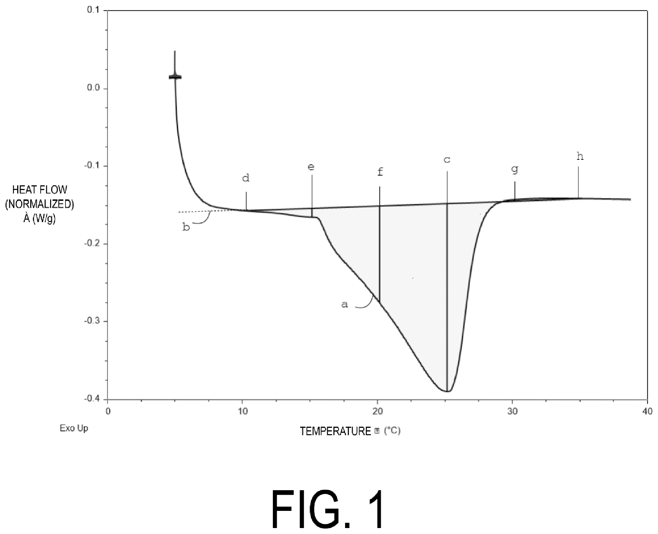

FIG. 1 illustrates a heat absorption curve and a baseline for calculating the heat absorption amount obtained by DSC for chocolates of Example 1 having the following compositional values. The horizontal axis represents the temperature [°C], and the vertical axis represents the heat flow [W/g] (input and output of energy per unit time). Auxiliary lines are drawn at units of 5°C with the peak top temperature as a reference point.
   (A-1) The content of cocoa butter in the chocolates is 19.9 mass%.
   (B-1) The fat-free cocoa solids content in the chocolates is 15.6 mass%.
   (C-1) The moisture content in the chocolates is 3 mass% or less.
   (D-1) The hardness of the chocolates at 15°C is 9.7 N.

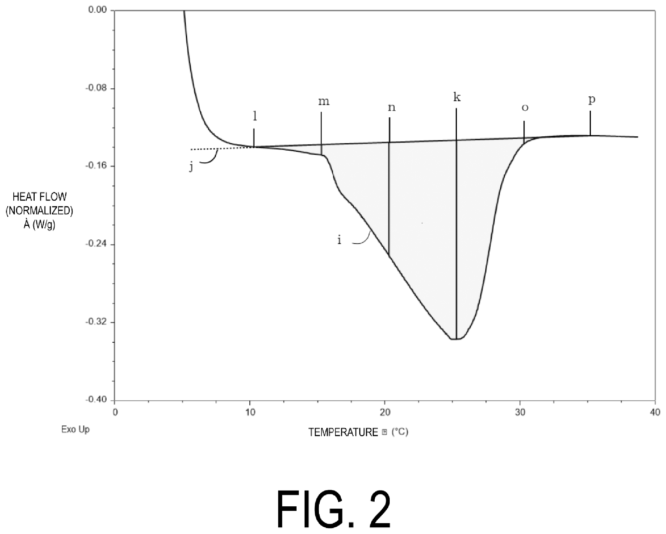

FIG. 2 illustrates a heat absorption curve and a baseline for calculating the heat absorption amount obtained by DSC for chocolates of Comparative Example 1 having the following compositional values. The horizontal axis and the vertical axis are the same as in FIG. 1. As in FIG. 1, auxiliary lines are drawn at units of 5°C with the peak top temperature as a reference point.
   - The content of cocoa butter in the chocolates is 19.9 mass%.
   - The fat-free cocoa solids content in chocolates is 15.6 mass%.
   - The moisture content in the chocolates is 3 mass% or less.
   - The hardness of the chocolates at 15°C is 31.9 N.

### DESCRIPTION OF EMBODIMENTS

In the present invention, the term chocolates refers to a food product in which an oil and/or fat forms a continuous phase, and generally refers to all foods produced by a typical chocolate production process. The term chocolates as used herein is not limited to "pure chocolate", "chocolate", "quasi-chocolate", and "chocolate-using foods" as defined by the Japan National Chocolate Industry Fair Trade Council, and refers to food products, including also oil and/or fat processed foods, that contain an oil and/or fat as an essential component and use ingredients such as cocoa mass, cocoa powder, whole milk powder, dried fruit juice powder, dried vegetable powder, cocoa butter, cocoa butter alternatives, and hard butter. Therefore, the term chocolates may refer to a general category of food products in which an edible substance is dispersed using an oil and/or fat as a base, such as a powdered tea flavoring and a strawberry flavoring in which powder derived from a vegetable or fruit is mixed.

In addition, in the present specification, the term chocolate mass refers to all chocolate ingredients used to prepare the chocolates of the present invention.

The chocolates of the present invention have a physical property of being soft and having plasticity in comparison to other chocolates. In a certain aspect, the chocolates of the present invention are spreadable and can be handled in the same manner as spreads and fillings.

More specifically, spreadable means a property of spreading like butter when the chocolates that have been left sitting at a temperature of 15°C, 20°C, or 25°C are spread.

The content of cocoa butter in the chocolates according to the present invention is 15 mass% or more and 36 mass% or less. When the content of cocoa butter is in an appropriate range, chocolates having a rich chocolate flavor can be prepared. The lower limit of the content of cocoa butter in the chocolates according to the present invention is preferably 16 mass%, more preferably 17 mass%, and even more preferably 18 mass%. Moreover, the upper limit of the content of cocoa butter in the chocolates is preferably 35 mass%, and more preferably 34 mass%.

In addition, the content of cocoa butter in the oil content contained in the chocolates is preferably 15 mass% or more and 80 mass% or less, more preferably 20 mass% or more and 75 mass% or less, and still more preferably 25 mass% or more and 70 mass% or less.

In typical chocolates, and particularly soft chocolates adjusted to have a soft physical property, crystals of the oil and/or fat on the surface of the chocolates may become coarse, resulting in a phenomenon called blooming. Moreover, an oil and/or fat having a relatively high melting point such as cocoa butter may be crystallized inside the chocolates, and a phenomenon called graining may occur due to rough granular oil and/or fat crystals or a coarse structure.

On the other hand, the chocolates according to the present invention have a soft physical property with plasticity despite containing a certain amount or more of cocoa butter, and are excellent in that the occurrence of blooming and graining is suppressed.

In the present invention, the term cocoa content refers to a portion of a cocoa-derived ingredient, such as cocoa mass and cocoa powder, from which moisture has been removed. Moreover, the term fat-free cocoa solids content refers to a portion of a cocoa-derived ingredient, such as cocoa mass and cocoa powder, from which cocoa butter and water have been removed. In the chocolates according to the present invention, the content of the fat-free cocoa solids content is 5 mass% or more and 40 mass% or less, and the lower limit of the fat-free cocoa solids content is preferably 6 mass% or 7 mass%, more preferably 8 mass%, and still more preferably 9 mass%. Moreover, the upper limit of the fat-free cocoa solids content is preferably 38 mass% or 35 mass%, more preferably 33 mass%, and still more preferably 30 mass%.

When the fat-free cocoa solids content is in an appropriate range, chocolates having a rich chocolate flavor can be prepared.

In the present invention, the oil content contained in the chocolates is preferably 45 mass% or more and 80 mass% or less in the chocolates. The lower limit of the oil content is more preferably 48 mass%, 50 mass%, 53 mass%, 55 mass%, 58 mass%, or 60 mass%. The upper limit of the oil content is more preferably 78 mass% or 75 mass%.

In the present specification, the oil content in the chocolates means the mass% of all the oils and/or fats contained in the cocoa ingredient, whole milk powder, or the like.

The chocolates according to the present invention have a moisture content of 0.1 mass% or more and 2.5 mass% or less. This is not substantially due to the addition of water as an ingredient in the chocolates, but rather, is substantially due to the small amount of moisture contained in each of the ingredients, such as the cocoa ingredients, sugar, or powdered milk.

The moisture content can be measured by a sea sand method.

The maximum load of the chocolates according to the present invention can be measured as the hardness by using a known means. The method for measuring the hardness is not particularly limited, and as an example, a creep meter (RE2-33005B) available from Yamaden Co., Ltd. can be used.

More specifically, a sample of chocolates is cut to a thickness of 30 mm and is left to stand at a temperature of 15°C, 20°C, or 25°C for 4 hours or longer. The maximum load of the chocolate sample adjusted to a temperature of 15°C, 20°C, or 25°C can be measured as the hardness using a creep meter and a cylindrical plunger with a diameter φ8 mm. The hardness measurement can be carried out by pressing the plunger into each sample at a speed of 1 mm/sec.

The hardness of the chocolates according to the present invention at a product temperature of 15°C is 20 N or less. When the hardness of the chocolates is 20 N or less, the chocolates have physical properties of being soft and having plasticity. The upper limit of the hardness of the chocolates at a product temperature of 15°C is preferably 19 N or 18 N, and is more preferably 17 N or 16 N. When the product temperature of the chocolates is 20°C, the upper limit of the hardness is preferably 20 N, 19 N, 18 N, or 17 N, more preferably 16 N, 15 N, or 14 N, and even more preferably 13 N or 12 N.

Moreover, the lower limit of the hardness of the chocolates at product temperatures of 15°C, 20°C, and 25°C is preferably 0 N.

If the chocolates have an appropriate hardness, the chocolates have physical properties of being soft and having plasticity, and when the chocolates are combined with other food products, the chocolates can be processed into spreads, fillings, coatings, toppings, and the like.

Typical chocolates are hard at 15°C or 20°C, soften slightly at 25°C, and melt rapidly at around 30°C. These features are in part due to the properties of cocoa butter, and give chocolates a sharp, melt in the mouth texture. Due to such properties of cocoa butter, it has been difficult to blend cocoa butter into chocolates at a certain amount or more while maintaining the hardness of the chocolates at 15°C at a certain level or lower. However, the chocolates according to the present invention are novel chocolates in which the hardness at 15°C is adjusted to 20 N or less, despite the fact that cocoa butter is blended therein at a certain amount or more.

In a certain aspect, the characteristics of the chocolates of the present invention can be confirmed by carrying out the following operation when the heat absorption amount is measured using a differential scanning calorimeter.

The temperature at which the maximum heat absorption amount is reached (hereinafter, referred to as the peak top temperature) is confirmed on the basis of the heat absorption curve obtained by differential scanning calorimetry (DSC) of the chocolates according to the present invention.

A baseline is drawn in a manner connecting the heat absorption amount at -15°C from the peak top temperature and the heat absorption amount at +10°C from the peak top temperature.

The area between the baseline and the heat absorption curve (hereinafter, referred to as the DSC endothermic area) is calculated through integration, and the heat absorption amount obtained by DSC is determined. Further, the heat absorption percentage in each temperature range is determined by divisional integration of the DSC endothermic area in units of 5°C with the peak top temperature being used as a reference point. Among the obtained heat absorption percentages, a ratio of a "heat absorption percentage between the peak top temperature and a temperature of 5°C above the peak top temperature" to a "heat absorption percentage between the peak top temperature and 5°C below the peak top temperature" (that is, the ratio of (heat absorption percentage from the peak top temperature to a temperature of 5°C above the peak top temperature)/(heat absorption percentage from the peak top temperature to 5°C below the peak top temperature)) is preferably 0.460 or less. The ratio of both heat absorption percentages is more preferably 0.455 or less, and even more preferably 0.450 or less. When the ratio of both heat absorption percentages is in an appropriate range, chocolates with physical properties of being soft and having plasticity can be prepared.

In addition, in the chocolates according to the present invention, of the heat absorption amounts obtained by DSC, the heat absorption percentage between the peak top temperature and the temperature at 5°C below the peak top temperature is preferably 52% or more. The lower limit of the heat absorption percentage between the peak top temperature and the temperature of 5°C below the peak top temperature is more preferably 53%, and even more preferably 53.5%, and the upper limit of the heat absorption percentage between the peak top temperature and the temperature of 5°C below the peak top temperature is more preferably 80% or 75%, and even more preferably 70%.

The measurement conditions for differential scanning calorimetry (DSC) for calculating the heat absorption percentages and the ratio of the heat absorption percentages are as follows.

A sample of chocolates stored at a temperature from 0°C to 10°C is placed in a furnace for measurements and maintained at 15°C. Subsequently, the sample is retained at 5°C for 7 minutes, then heated from 5°C to 40°C at a heating rate of 5°C/min, and a heat absorption curve is measured.

As the instrument for DSC, a general differential scanning calorimeter can be used, and as an example, the DSC2500 available from TA Instruments can be used.

A U3-type triglyceride and an SU2-type triglyceride are preferably contained in the oil content of the chocolates according to the present invention. The triglycerides have a structure in which three molecules of fatty acids are ester-bonded to one molecule of glycerol. The 1 -, 2 - and 3-positions of the triglyceride represent the positions to which fatty acids are bonded.

Here, S represents a saturated fatty acid having from 16 to 22 carbons, and U represents an unsaturated fatty acid having from 16 to 22 carbons. U3 refers to a triglyceride in which the fatty acids at the 1-, 2-, and 3-positions are all U. In addition, SU2 refers to a triglyceride in which any one of the fatty acids at the 1 -, 2 -, and 3-positions is S and the remaining fatty acids are U. Of the triglycerides in the oil content, the total amount of U3 and SU2 triglycerides is preferably 50 mass% or more and 85 mass% or less, the lower limit of the total amount of U3 and SU2 triglycerides is more preferably 51 mass% or 52 mass%, and even more preferably 53 mass%, and the upper limit of the total amount of U3 and SU2 triglycerides is more preferably 83 mass% or 80 mass%, and even more preferably 78 mass% or 75 mass%.

When the total amount of U3 type triglycerides and SU2 type triglycerides is within an appropriate range, chocolates with physical properties of being soft and having plasticity can be prepared.

The triglyceride composition of the oil and/or fat can be determined by high-performance liquid chromatography in accordance with 2.4.6.2-2013 of the Japan Standard Methods for the Analysis of Fats, Oils, and Related Materials. An analysis sample is prepared by mixing a melted oil and/or fat with acetone, and then separated in an ODS column using, as the mobile phase, a solvent of acetone/acetonitrile = 80/20, and peak area% values obtained by detection with an RI detector can be calculated as the contents of the respective triglycerides.

A chocolate mass for preparing chocolates according to the present invention can be produced by a typical process for producing chocolates (such as mixing, roll-refining, a conching treatment, and molding, cooling, and solidifying). In addition, other production methods can also be used, such as a production method involving mixing and refining using a ball mill, a bead mill, or the like.

The chocolates according to the present invention can be produced by using a scraped surface heat exchanger to cool and stir a chocolate mass prepared by the above-described production method.

The scraped surface heat exchanger referred to in the present invention is also called a sealed continuous tube cooler, and is generally used for the production of water-in-oil type emulsified oil and/or fat compositions such as margarine and fat spreads, in addition to chocolates. The feature of this device is that the ingredients are passed through a narrow gap between a shaft and a wall cooled by a refrigerant, and through rotation of the shaft, ingredient adhering to the wall is scraped off by a scraping blade, and thereby emulsification, cooling, and kneading are carried out almost simultaneously. Specific examples of such a device include the Kombinator, the Votator, and the Perfector, but the present invention is not limited thereto.

In order to prepare the chocolates of the present invention, the following conditions are adopted in a certain aspect as conditions for cooling and stirring using a scraped surface heat exchanger.

First, the chocolate mass used for the chocolates according to the present invention is brought to a molten state at a product temperature of 45°C or higher. The temperature of the molten chocolate mass is preferably 45°C or higher and 60°C or less.

The chocolate mass can then be cooled and stirred in a scraped surface heat exchanger. When the chocolate mass is cooled and stirred by the scraped surface heat exchanger and discharged from the sealed tube, the product temperature of the chocolate mass at the time of discharge is preferably 16°C or higher and 23°C or less. The lower limit of the product temperature of the chocolate mass at the time of discharge is more preferably 16.5°C, still more preferably 17°C, and most preferably 17.5°C. The upper limit of the product temperature of the chocolate mass at the time of discharge is more preferably 22°C, still more preferably 21°C, and most preferably 20.5°C. When the product temperature of the chocolate mass at the time of discharge is in an appropriate range, chocolates with physical properties of being soft and having plasticity can be prepared.

The residence time of the chocolate mass according to the present invention in the sealed tube of the scraped surface heat exchanger while cooling and stirring is preferably 2 minutes or longer. The residence time is more preferably 2 minutes and 30 seconds or longer, or 3 minutes or longer, even more preferably 3 minutes and 30 seconds or longer, or 4 minutes or longer, and most preferably 4 minutes and 30 seconds or longer. When the residence time of the chocolate mass in the sealed tube is within an appropriate range, chocolates with physical properties of being soft and having plasticity can be prepared.

The chocolate mass discharged from the sealed tube is inserted into a container and cooled at a temperature of 10°C or lower, and thereby chocolates according to a certain aspect of the present invention are prepared. The container for the chocolates is not particularly limited, and as an example, a sealed container such as a pillow pouch in which a film made of polyethylene or the like is formed into a tube and the bottom and the top are sealed may be used.

Since the chocolates according to the present invention have physical properties of being soft and having plasticity, the chocolates can be combined with another food product to prepare a composite food product in applications such as filling, kneading, coating, and topping.

The other food product to be combined is not particularly limited as long as it is a confectionery or bakery product. Examples of the confectioneries include financiers, tarts, langue de chat, cookies, biscuits, pies, pound cakes, fruitcakes, madeleines, baumkuchen, sponge cakes, roll cakes, angel cakes, waffles, pretzels, wafers, crepe, souffles, beignet buns, castella cakes, dorayaki, imagawayaki, taiyaki, kintsuba, and additionally, cold confectionaries such as ice cream, frozen confectionaries, soft serve, gelato, and sherbet/sorbet. Examples of the bakery products include white bread, hot dog buns, fruit bread, corn bread, butter rolls, hamburger buns, donuts, French bread, rolls, sweet bread, sweet dough, hardtack, muffins, bagels, croissants, Danish pastries, and naan bread.

As an example of a case in which the chocolates according to the present invention are combined with another food product, when the chocolate is used as a filling, a composite food product can be prepared, such as a Tigre cake, a tart, a chocolate langue de chat, a chocolate sandwich cookie, chocolate bonbons, truffles, macarons, eclairs, cream puffs, chocolate fondant, muffins, chocolate fudge, mille-feuille, and donuts.

In addition, examples of food products that can be prepared by kneading the chocolates according to the present invention into another food product include mousses, cakes, roll cakes, chocolate cakes, brownies, chocolate terrine, chocolate ice cream, chocolate financier, sachertorte, and chocolate bûche.

Moreover, examples of food products that can be prepared when the chocolates according to the present invention are used as a topping or mixed with other ingredient include Mont Blanc cake, chocolate cake, decorated cakes, chocolate saucisson, and chocolate cupcakes.

For the above-described composite food, a temperature range of the food itself when consumed is not particularly limited. Examples of the temperature range includes a room temperature range, a refrigerated temperature range, a frozen temperature range, and a sub-freezing temperature range. In each temperature range, confectionaries and bakery products that have been distributed and stored can be prepared.

In the present specification, kinds of the cold confectionaries are not particularly limited, as long as they are confectionaries to be consumed in the frozen temperature range or sub-freezing temperature range, but representative examples thereof include ice cream, ice milk, and lacto ice as stipulated by The Ministerial Order on Milk and Milk Products Concerning Compositional Standards, etc., which is so called "Milk, etc. Ministerial Order," and frozen confectionaries as stipulated by The Ministry of Health Notification on "Standards and Specifications for Foods and Food Additives, etc." Note that in the present specification, in addition to the above-described ice cream and frozen confectionaries, frozen desserts such as frozen cakes, float, parfait, and gâteau chocolat (chocolate cake), which are to be consumed without thawing process after chilled in the frozen temperature range, are also widely referred to as a cold confectionary.

In the present specification, the room temperature range refers to a natural temperature of spaces and environments, which is a temperature range approximately from 15°C to 30°C. The refrigerated temperature range refers to a preserving temperature range that can suppress microbial growth, which is a temperature range approximately from 0°C to 10°C. The frozen temperature range refers to a temperature range of -18°C or below, as stipulated by Codex. Further, the sub-freezing temperature range refers to a temperature range from 0°C to -18°C, which does not belong to either the refrigerated temperature range or the frozen temperature range. Examples of the foods to be consumed in the sub-freezing temperature range include soft serve, gelato, and sherbet/sorbet.

The chocolates according to the present invention are characterized by the physical properties of being soft and having plasticity, regardless of the fact that cocoa butter is blended therein at a certain amount or more. Chocolates containing cocoa butter are tempered during cooling and solidification in order to suppress the occurrence of blooming and graining. The suitable temperature during this tempering operation is generally in an approximate range from 25°C to 32°C. However, the chocolates according to the present invention are cooled to a temperature lower than this general temperature condition using a scraped surface heat exchanger, and are adjusted to have the physical properties of being soft and having plasticity. This is considered to be due to the simultaneous precipitation and refining and dispersion of crystals brought about by cooling the chocolates to a temperature lower than that of a typical tempering operation while stirring, thereby intentionally limiting the growth and alignment of oil and/or fat crystals contained in the chocolates. The growth and alignment of crystals can impart hardness to the chocolates, but it is considered that the chocolates according to the present invention achieve the physical properties of being soft and having plasticity by intentionally limiting this crystal growth and alignment.

Therefore, the present invention can also be described as a method for improving the physical properties of chocolates.

As the ingredients used for the chocolates according to the present invention, any ingredient can be used without particular limitation as long the requirements for the cocoa butter, fat-free cocoa solids content, and the like are satisfied. The composition of typical chocolates can also be applied as a reference. As one example, a milk component, an oil and/or fat, and other edible materials can be appropriately combined. Examples of any other additive include an emulsifier, an antioxidant, and a flavor, but the type and amount are not limited, and addition of these may be omitted.

### Examples

Hereinafter, the present invention will be described in more detail by presenting examples of the present invention. In the examples, both % and parts are meant to be on a mass basis.

### • Preparation of Chocolate Mass

According to the formulations in Table 1, powdered ingredients such as cocoa mass and sugar were mixed with a portion of melted vegetable oil and/or fat in a mixer. The mixed dough was refined with a roll refiner, and then the remaining vegetable oil and/or fat and lecithin were added and mixed to prepare respective chocolate masses.

The moisture content of each of the prepared chocolate masses was measured by the sea sand method.

The following ingredients were used to prepare the chocolate masses.
Vegetable oil and/or fat A: Refined rapeseed oil (iodine value: 117)
Vegetable oil and/or fat B: Soft fractionated palm oil (iodine value: 67)
Vegetable oil and/or fat C: Fully hydrogenated high-erucic-acid rapeseed oil (iodine value: 1)
Emulsifier X: Soy lecithin
Emulsifier Y: Polyglycerin fatty acid ester (SY-Glyster HB750, available from Sakamoto Yakuhin Kogyo Co., Ltd.)
Emulsifier Z: Sucrose fatty acid ester ("Ryoto Sugar Ester S-170" (available from Mitsubishi Chemical Corporation)

As other ingredients, commercially available ingredients were used.

As the cocoa powder, an alkali cocoa powder having an oil content of about 23% was used.

Each chocolate mass was referred to as "Chocolate Mass" and numbered.

**[Table 1]**

| | Chocolate Mass 1 | Chocolate Mass 2 | Chocolate Mass 3 | Chocolate Mass 4 |
|---|---|---|---|---|
| Cocoa mass [parts by mass] | 36.19 | 60.00 | 22.61 | - |
| Cocoa powder [parts by mass] | - | - | - | 16.00 |
| Sugar [parts by mass] | 15.20 | - | 17.98 | 43.00 |
| Whole milk powder [parts by mass] | 8.37 | - | 5.23 | 5.00 |
| Corn starch [parts by mass] | - | - | 6.10 | - |
| Cocoa butter [parts by mass] | - | - | 2.83 | - |
| Vegetable oil and/or fat A [parts by mass] | 39.83 | 40.00 | 44.99 | - |
| Vegetable oil and/or fat B [parts by mass] | - | - | - | 34.60 |
| Vegetable oil and/or fat C [parts by mass] | - | - | - | 1.40 |
| Emulsifier X [parts by mass] | 0.40 | - | 0.25 | 0.50 |
| Emulsifier Y [parts by mass] | - | - | - | 0.18 |
| Emulsifier Z [parts by mass] | - | - | - | 0.18 |
| Flavoring [parts by mass] | 0.01 | - | 0.01 | - |
| Moisture content [mass%] | 1.0 | 1.2 | 1.4 | 0.9 |

The chocolate masses prepared above and the following conditions of Production 1 to 3 were selected in combinations described in Table 2, and chocolates were prepared.

### • Production 1: Scraped surface heat exchanger

Among the chocolate masses prepared above, Chocolate Mass 1, Chocolate Mass 2, and Chocolate Mass 3 were maintained in a molten state at a product temperature of 50°C. The chocolate masses were then cooled and stirred using a scraped surface heat exchanger. After cooling and stirring in the sealed tube of the scraped surface heat exchanger, the product temperature of each discharged chocolate mass was adjusted to 19±2°C.

Moreover, the residence time in the sealed tube of the scraped surface heat exchanger was from 150 seconds to 400 seconds.

Pillow pouches (pillow size: 38 mm in diameter x 29 mm) were each filled with 2 kg of the chocolate mass discharged from the scraped surface heat exchanger, and then cooled in a refrigerator set to 5°C, and chocolates were thereby prepared.

### • Production 2: Tempering with seed material

Chocolate Mass 1, Chocolate Mass 2, and Chocolate Mass 3 of the chocolate masses prepared above were brought to a molten state at 50°C and then maintained at 25°C.

Into the chocolate masses maintained at 25°C, a seed material of an amount of 0.1% in relation to the mass of each chocolate mass was added, and the mixture was sufficiently stirred. After stirring, a plastic cup having a volume of 60 mL (bottom surface diameter 45 mm, Clean Cup 60BL: available from Risu Pack Co., Ltd.) was filled with from 40 to 45 g of the mixture, the mixture was then cooled in a refrigerator set to 5°C, and chocolates were thereby prepared.

As the seed material, Choco Seed LT (available from Fuji Oil Co., Ltd.) was used.

### • Production 3: Cooling and solidification without temperature control

Among the chocolate masses prepared above, Chocolate Mass 1 and Chocolate Mass 4 were brought into a molten state at 50°C, and similar to the samples of Production 2, 60 mL cups were each filled with from 40 to 45 g of a respective chocolate mass, the chocolate masses were cooled in a refrigerator set at 5°C, and chocolates were thereby prepared.

### • Hardness Evaluation

A sample of each chocolate was cut to a thickness of 30 mm, the samples were placed in incubators at respective temperatures of 15°C, 20°C, and 25°C and allowed to stand for 4 to 6 hours, and thereby the product temperature was adjusted.

Each sample with an adjusted product temperature was removed from the incubator, and the maximum load was measured as the hardness using a creep meter under the following conditions.

Measuring instrument: Creep meter (RE2-33005B), available from Yamaden Co., Ltd.

Tool used: φ8 mm × H22 plunger (model P-6), available from Yamaden Co., Ltd.

The rate at which the plunger was pressed into the chocolates was 1 mm/sec.

### • Triglyceride Measurement

The triglycerides were measured by high-performance liquid chromatography in accordance with 2.4.6.2-2013 of the Japan Standard Methods for the Analysis of Fats, Oils, and Related Materials. Specifically, an analysis sample was prepared by mixing the melted oil and/or fat with acetone, and then separated by an ODS column using, as the mobile phase, a solvent of acetone/acetonitrile = 80/20, and peak area% values obtained by detection with an RI detector were calculated as the contents of the respective triglycerides.

In the following table, S3, S2U, SU2, and U3 represent S3-type triglyceride, S2U-type triglyceride, SU2-type triglyceride, and U3-type triglyceride, respectively.

The chocolate masses used for the production, the production method, the composition of the oil and the like, and the hardness results are presented in Table 2.

**[Table 2]**

| | | Example 1 | Comparative Example 1 | Comparative Example 2 | Example 2 | Comparative Example 3 |
|---|---|---|---|---|---|---|
| Formulation | | Chocolate Mass 1 | Chocolate Mass 1 | Chocolate Mass 1 | Chocolate Mass 2 | Chocolate Mass 2 |
| Production | | Production 1 | Production 2 | Production 3 | Production 1 | Production 2 |
| Oil content [mass%] | | 62.3 | 62.3 | 62.3 | 61.8 | 61.8 |
| Moisture content [mass%] | | 1.0 | 1.0 | 1.0 | 1.2 | 1.2 |
| Cocoa butter [mass%] | | 19.9 | 19.9 | 19.9 | 33.0 | 33.0 |
| Fat-free cocoa solids content [mass%] | | 15.6 | 15.6 | 15.6 | 25.8 | 25.8 |
| S3 [mass% / in triglycerides] | | 0.6 | 0.6 | 0.6 | 0.7 | 0.7 |
| S2U [mass% / in triglycerides] | | 34.1 | 34.1 | 34.1 | 45.0 | 45.0 |
| SU2 [mass% / in triglycerides] | | 18.2 | 18.2 | 18.2 | 16.0 | 16.0 |
| U3 [mass% / in triglycerides] | | 44.1 | 44.1 | 44.1 | 37.0 | 37.0 |
| Presence of graining | | No | No | **Yes** | No | No |

| Hardness (maximum load) | | | | | | |
|---|---|---|---|---|---|---|
| | 15°C [N] | 9.7 | 31.9 | - | 15.2 | 79.4 |
| | 20°C [N] | 5.3 | 14.4 | - | 11.9 | 45 |
| | 25°C [N] | 0.6 | 1.5 | - | 3.0 | 10.6 |

| | Example 3 | Comparative Example 4 | Comparative Example 5 | |
|---|---|---|---|---|
| Formulation | Chocolate Mass 3 | Chocolate Mass 3 | Chocolate Mass 4 | |
| Production | Production 1 | Production 2 | Production 3 | |
| | | | | |
| Oil content [mass%] | | 73.0 | 73.0 | 41.0 |
| Moisture content [mass%] | | 1.3 | 1.3 | 1.0 |
| Cocoa butter [mass%] | | 15.3 | 15.3 | 3.7 |
| Fat-free cocoa solids content [mass%] | | 9.7 | 9.7 | 11.7 |
| S3 [mass% / in triglycerides] | | 0.4 | 0.4 | 4.5 |
| S2U [mass% / in triglycerides] | | 27.6 | 27.6 | 32.5 |
| SU2 [mass% / in triglycerides] | | 19.7 | 19.7 | 54.1 |
| U3 [mass% / in triglycerides] | | 50.5 | 50.5 | 6.6 |
| Presence of graining | | No | No | No |

| Hardness (maximum load) | | | | |
|---|---|---|---|---|
| | 15°C [N] | 2.2 | 24.5 | 2.1 |
| | 20°C [N] | 1.2 | 5.5 | 1.1 |
| | 25°C [N] | 0 | 0 | 0.9 |

In the examples prepared under the conditions of Production 1 using the scraped surface heat exchanger, the hardness of the chocolates was 20 N or less at 15°C.

Furthermore, the chocolates prepared with the chocolate masses 1, 2, and 3 having a high cocoa butter content had a rich chocolate flavor, but the chocolate flavor of the comparative example prepared with Chocolate Mass 4 was insufficient.

The moisture values of the chocolates did not differ from the moisture values of the chocolate masses in any of the production methods.

### • DSC

A chocolate sample was placed in a differential scanning calorimeter (DSC2500, available from TA Instruments), and the temperature in the oven was set to 15°C. The sample was then maintained at 5°C for 7 minutes, and then heated from 5°C to 40°C at a temperature increase rate of 5°C/min, and the heat absorption curve measured.

Based on the obtained heat absorption curve, a baseline was drawn in a manner connecting the heat absorption amount at -15°C from the temperature when the maximum heat absorption amount was reached (the "peak top temperature") and the heat absorption amount at +10°C from the peak top temperature.

The area enclosed between the baseline and the heat absorption curve (DSC endothermic area) was calculated by integration, and the heat absorption amount as determined by DSC are presented.

Using the peak top temperature as a reference point, the heat absorption amount by DSC was divided and integrated into respective heat absorption percentages for temperature ranges from 15°C below the peak top temperature to 10°C below the peak top temperature, from 10°C below the peak top temperature to 5°C below the peak top temperature, from 5°C below the peak top temperature to the peak top temperature, from the peak top temperature to 5°C above the peak top temperature, and from 5°C above the peak top temperature to 10°C above the peak top temperature, and the results are presented in Table 3.

Moreover, in the table, the heat absorption percentages are indicated as (1) to (5) as follows.
(1) Heat absorption percentage from 15°C below the peak top temperature to 10°C below the peak top temperature
(2) Heat absorption percentage from 10°C below the peak top temperature to 5°C below the peak top temperature
(3) Heat absorption percentage from 5°C below the peak top temperature to the peak top temperature
(4) Heat absorption percentage from the peak top temperature to 5°C above the peak top temperature
(5) Heat absorption percentage from 5°C above the peak top temperature to 10°C above the peak top temperature

### • Spreadability Test

Chocolate samples were cut into a size of 30 mm (length) × 30 mm (width) × 10 mm (thickness). The samples were each placed in an incubator at 15°C, 20°C, or 25°C and allowed to stand for 2 to 4 hours to thereby adjust the product temperature of the sample. Each of the temperature-adjusted samples was placed on craft paper and spread with a butter knife, and the spreadability was evaluated. When the sample was spread, a 15 mm portion in the length direction of each sample was used as a reference point, and the butter knife was used to spread each sample in the horizontal direction.

The spreadability of the chocolates was evaluated according to the following criteria.

Good: The chocolate spread 30 mm or more horizontally without interruption.

Suitable: Spreading was somewhat uneven, but the chocolate spread sufficiently within an acceptable range.

Unsuitable: The chocolate could not be spread or spreading could only be achieved with considerable force.

The DSC results and spreadability ratings are presented in Table 3.

**[Table 3]**

| | | Example 1 | Comparative Example 1 | Comparative Example 2 | Example 2 | Comparative Example 3 |
|---|---|---|---|---|---|---|
| Formulation | | Chocolate Mass 1 | Chocolate Mass 1 | Chocolate Mass 1 | Chocolate Mass 2 | Chocolate Mass 2 |
| Production | | Production 1 | Production 2 | Production 3 | Production 1 | Production 2 |
| DSC | | | | | | |
| Peak top temperature [°C.] | | 25.2 | 25.5 | 24.9 | 28.5 | 28.1 |
| (1) Heat absorption percentage [%] from 15°C below peak top temperature to 10°C below peak top temperature | | 1.6 | 1.5 | 1.9 | 3.4 | 3.4 |
| (2) Heat absorption percentage [%] from 10°C below peak top temperature to 5°C below peak top temperature | | 21.3 | 20.9 | 19.2 | 20.1 | 21.7 |
| (3) Heat absorption percentage [%] from 5°C below peak top temperature to peak top temperature | | 56.1 | 49.8 | 51.9 | 56.5 | 50.8 |
| (4) Heat absorption percentage [%] from peak top temperature to 5°C above peak top temperature | | 21.0 | 27.8 | 26.9 | 20.0 | 24.1 |
| (5) Heat absorption percentage [%] from 5°C above peak top temperature to 10°C above peak top temperature | | 0 | 0 | 0.1 | 0 | 0 |
| Ratio of (4)/(3) | | 0.374 | 0.557 | 0.517 | 0.354 | 0.474 |
| Presence of graining | | No | No | **Yes** | No | No |

| Spreadability | | | | | | |
|---|---|---|---|---|---|---|
| | 15°C | Suitable | Unsuitable | - | Suitable | Unsuitable |
| | 20°C | Suitable | Unsuitable | - | Suitable | Unsuitable |
| | 25°C | Good | Good | - | Good | Suitable |

| | Example 3 | Comparative Example 4 | Comparative Example 5 | |
|---|---|---|---|---|
| Formulation | | Chocolate Mass 3 | Chocolate Mass 3 | Chocolate Mass 4 |
| Production | | Production 1 | Production 2 | Production 3 |
| DSC | | | | |
| Peak top temperature [°C] | | 24.8 | 24.1 | 19.1 |
| (1) Heat absorption percentage [%] from 15°C below peak top temperature to 10°C below peak top temperature | | 3.2 | 3.6 | 0 |
| (2) Heat absorption percentage [%] from 10°C below peak top temperature to 5°C below peak top temperature | | 16.1 | 19.4 | 0 |
| (3) Heat absorption percentage [%] from 5°C below peak top temperature to peak top temperature | | 56.3 | 49.5 | 44.5 |
| (4) Heat absorption percentage [%] from peak top temperature to 5°C above peak top temperature | | 24.4 | 26.2 | 50.7 |
| (5) Heat absorption percentage [%] from 5°C above peak top temperature to 10°C above peak top temperature | | 0 | 1.3 | 4.8 |
| Ratio of (4)/(3) | | 0.433 | 0.529 | 1.139 |
| Presence of graining | | No | No | No |

| Spreadability | | | | |
|---|---|---|---|---|
| | 15°C | Good | Unsuitable | Good |
| | 20°C | Good | Suitable | Good |
| | 25°C | Good | Good | Good |

The results of the ratio of heat absorption percentages by DSC and the spreadability of the chocolates of the examples concurred well with the results of the hardness of the chocolates.

Chocolate Mass 1 prepared in the previous study was cooled and stirred using a scraped surface heat exchanger, and chocolates were prepared. At the outlet of the sealed tube, the product temperature of the chocolate mass, which is a condition of the scraped surface heat exchanger, was changed to prepare respective chocolate samples. The residence time during the production using the scraped surface heat exchanger, the product temperature of the chocolate mass at the outlet of the sealed tube, and the results of the verification carried out in the previous experiment are presented in Table 4. The product temperature of the chocolate mass at the outlet of the sealed tube is described in the table as the "Product temperature at sealed tube outlet".

**[Table 4]**

| | | Example 1 | Comparative Example 6 | Example 4 |
|---|---|---|---|---|
| Formulation | | Chocolate Mass 1 | Chocolate Mass 1 | Chocolate Mass 1 |
| Residence time [sec] | | 345 | 155 | 260 |
| Product temperature [°C] at sealed tube outlet | | 17.9 | 25.4 | 19.9 |

| Hardness (maximum load) | | | | |
|---|---|---|---|---|
| 15°C [kg·m/s²] | | 9.7 | 36.6 | 15.7 |
| 20°C [kg·m/s²] | | 5.3 | 17.1 | 8.3 |
| 25°C [kg·m/s²] | | 0.6 | 1.2 | 0.9 |

| DSC | | | | |
|---|---|---|---|---|
| Peak top temperature [°C] | | 25.2 | 27.3 | 25.8 |
| (1) Heat absorption percentage [%] from 15°C below peak top temperature to 10°C below peak top temperature | | 1.6 | 4.5 | 1.7 |
| (2) Heat absorption percentage [%] from 10°C below peak top temperature to 5°C below peak top temperature | | 21.4 | 26.4 | 20.4 |
| (3) Heat absorption percentage [%] from 5°C below peak top temperature to peak top temperature | | 56.4 | 47.2 | 54.6 |
| (4) Heat absorption percentage [%] from peak top temperature to 5°C above peak top temperature | | 21.1 | 21.9 | 23.2 |
| (5) Heat absorption percentage [%] from 5°C above peak top temperature to 10°C above peak top temperature | | 0 | 0 | 0.1 |
| Ratio of (4)/(3) | | 0.374 | 0.464 | 0.425 |
| Presence of graining | | No | No | No |

| Spreadability | | | | |
|---|---|---|---|---|
| | 15°C | Suitable | Unsuitable | Suitable |
| | 20°C | Suitable | Unsuitable | Good |
| | 25°C | Good | Good | Good |

The results for the hardness of the chocolate, the ratio of the heat absorption percentages by DSC, and the spreadability were changed by changing the product temperature of the chocolate mass at the sealed tube outlet. The results demonstrated that when the product temperature of the chocolate mass at the sealed tube outlet is appropriate, chocolates can be prepared with physical properties including good spreadability.

Moreover, the results regarding the spreadability of the chocolates concurred well with the results of the hardness of the chocolates and the ratio of the heat absorption percentages as determined by DSC.

### Industrial Applicability

According to the present invention, chocolates containing cocoa butter at a certain amount or more with physical properties of being soft and having plasticity can be provided.

### Reference Signs List

- a:: Heat absorption curve
- b:: Baseline
- c:: Auxiliary line drawn at the peak top temperature for divisional integration of the DSC endothermic area
- d:: Similar to c, an auxiliary line drawn at a temperature of 15°C below the peak top temperature
- e:: Similar to c, an auxiliary line drawn at a temperature of 10°C below the peak top temperature
- f:: Similar to c, an auxiliary line drawn at a temperature of 5°C below the peak top temperature
- g:: Similar to c, an auxiliary line drawn at a temperature of 5°C above the peak top temperature
- h:: Similar to c, an auxiliary line drawn at a temperature of 10°C above the peak top temperature
- i:: Heat absorption curve
- j:: Baseline
- k:: Auxiliary line drawn at the peak top temperature for divisional integration of the DSC endothermic area
- l:: Similar to k, an auxiliary line drawn at a temperature of 15°C below the peak top temperature
- m:: Similar to k, an auxiliary line drawn at a temperature of 10°C below the peak top temperature
- n:: Similar to k, an auxiliary line drawn at a temperature of 5°C below the peak top temperature
- o:: Similar to k, an auxiliary line drawn at a temperature of 5°C above the peak top temperature
- p:: Similar to k, an auxiliary line drawn at a temperature of 10°C above the peak top temperature

## Claims

1. Chocolates, satisfying all of the following requirements (A) to (D):
(A) a content of cocoa butter in the chocolates is 15 mass% or more and 36 mass% or less;
(B) a fat-free cocoa solids content in the chocolates is 5 mass% or more and 40 mass% or less;
(C) a moisture content in the chocolates is 3 mass% or less; and
(D) a hardness of the chocolates at 15°C is 20 N or less,
provided that, the hardness of the chocolates refers to a maximum load measured by a physical property measuring instrument, and
is the maximum load obtained under a measurement condition in which a cylindrical measuring instrument having a diameter of 8 mm is pressed at a speed of 1 mm/sec into the chocolates having a shape larger than 8 mm in diameter.

2. The chocolates according to claim 1, further satisfying the following requirement (E):
(E) in terms of a heat absorption amount measured by differential scanning calorimetry (DSC), a ratio of a "heat absorption percentage from a peak top temperature to a temperature of 5°C above the peak top temperature" to a "heat absorption percentage from 5°C below the peak top temperature to the peak top temperature" (that is, the ratio of (heat absorption percentage from the peak top temperature to the temperature of 5°C above the peak top temperature)/(heat absorption percentage from 5°C below the peak top temperature to the peak top temperature)) is 0.460 or less,
provided that, the peak top temperature is a temperature at which a maximum heat absorption amount is exhibited,
the heat absorption amount measured by differential scanning calorimetry (DSC) refers to a value calculated by integrating an area between a baseline and a heat absorption curve, with the baseline being drawn in a manner connecting the heat absorption amount at a temperature of 15°C below the peak top temperature and the heat absorption amount at a temperature of 10°C above the peak top temperature, and
the heat absorption percentage refers to a value calculated by subjecting the heat absorption amount obtained by differential scanning calorimetry (DSC) to divisional integration in units of 5°C with the peak top temperature being used as a reference point.

3. The chocolates according to claim 1 or 2, further satisfying the following requirement (F):
(F) a total amount of U3 and SU2 in triglycerides constituting an oil content of the chocolates is 50 mass% or more and 85 mass% or less.

4. A method for producing chocolates, the method comprising all of the following steps a) and b) and using a scraped surface heat exchanger:
a) bringing a chocolate mass to a molten state at a temperature of 45°C or higher; and
b) cooling the chocolate mass obtained in a) to a product temperature of 16°C or higher and 23°C or less while stirring the chocolate mass, and filling a container with the chocolate mass.

5. A composite confectionery, comprising the chocolates described in any one of claims 1 to 3 in combination with another food product.

6. A method for improving physical properties of chocolates, the method comprising preparing chocolates in a manner satisfying all of the following requirements (A) to (D):
(A) a content of cocoa butter in the chocolates is 15 mass% or more and 36 mass% or less;
(B) a fat-free cocoa solids content in the chocolates is 5 mass% or more and 40 mass% or less;
(C) a moisture content in the chocolates is 3 mass% or less; and
(D) a hardness of the chocolates at 15°C is 20 N or less,
provided that, the hardness of the chocolates refers to a maximum load measured by a physical property measuring instrument, and
is the maximum load obtained under a measurement condition in which a cylindrical measuring instrument having a diameter of 8 mm is pressed at a speed of 1 mm/sec into the chocolates having a shape larger than 8 mm in diameter.

7. The method for improving physical properties of chocolates according to claim 6, the method comprising all of the following steps a) and b) and using a scraped surface heat exchanger:
a) bringing a chocolate mass to a molten state at a temperature of 45°C or higher; and
b) cooling the product temperature of the chocolate mass obtained in a) to a temperature of 16°C or higher and 23°C or less while stirring the chocolate mass, and filling a container with the chocolate mass.
